# EUROPEAN PATENT APPLICATION

(11) **EP 2 952 473 A1**
(43) Date of publication of application: **09.12.2015**
(21) Application number: 13873870.3
(22) Date of filing: 01.02.2013
(51) Int. Cl.: C01B 3/08

(54) **METHOD FOR GENERATING HYDROGEN BY MEANS OF REACTION WITH ALUMINIUM**

(71) Applicant: Reflectia, S.A., 01012 Vitoria-Gasteiz (Álava) (ES)
(72) Inventor: SALUEÑA BERNA, Xavier, 01012 Vitoria-Gasteiz (Álava) (ES); MARTINEZ MAEZLU, Rodrigo, 01012 Vitoria-Gasteiz (Álava) (ES); BORGE BRAVO, Gregorio, 01012 Vitoria-Gasteiz (Álava) (ES); DAGA MONMANY, Josep Maria, 01012 Vitoria-Gasteiz (Álava) (ES); MARTINEZ LOPEZ, Joan, 01012 Vitoria-Gasteiz (Álava) (ES)
(74) Representative: De Pablos Riba, Juan Ramon
(86) International application number: PCT/ES2013/000022
(87) International publication number: WO 2014/118392

(57) **Abstract**

The invention relates to a method for generating hydrogen by means of a reaction with aluminium, based on reacting aluminium with water in a hydroxide solution, comprising the addition of alcohol as a solvent to the solution. The alcohol is of the type having a lower density, higher vaporisation temperature and lower reactivity, preferably isopropanol, ethanol or bioethanol. The reactor is first filled with aluminium and, subsequently, the alcohol is added so that the the reactor is completely full. Part of the alcohol is then emptied such that it only covers the aluminium, with the rest of the space being emptied, The hydroxide solution is then metered according to the hydrogen demand. The hydrogen and the alcohol vapour generated are distilled in an exchanger. The distilled alcohol is returned to the reactor and the hydrogen is filtered and stored.

## Description

### OBJECT OF THE INVENTION

The invention, as stated the title of the present specification, relates to a method for generating hydrogen by means of a reaction with aluminium, which brings, to the function that is intended, several advantages and innovative features, which will be described later, and which represent an improvement of the current state of the art in its field of application.

More particularly, the object of the invention is focused on an innovative method for generating hydrogen the purpose of which is to be used for fuel cells and having the particularity of considering the use of a solvent such as alcohol in the hydroxide solution, providing effects that favour the reaction of aluminium with water in the production of hydrogen.

### FIELD OF APPLICATION OF THE INVENTION

The field of application of the present invention falls within the sector of industry dedicated to the production of hydrogen with aluminium for fuel cells or for other industrial uses.

### BACKGROUND OF THE INVENTION

Historically, the methodology used in the production of hydrogen with aluminium is based on introducing aluminium scraps in baskets arranged inside a reactor with water and reagent; or on transforming aluminium into powder or nano particles and combine it with steam at high temperature; or on immersing all the metal in a reactor by changing the level depending on the demand, either by pressure or heights between communicating vessels.

In addition, there are different patents for reacting aluminium with water by addition of chemical products, amalgams and alloys, without specifying the method.

The problem of working with dust or nano particles of aluminium, alloys or amalgams are the costs associated with the raw material and to the environment, so it is preferred to work from products of standard aluminium alloys or, their waste.

One of the most common ways of accelerating the aluminium-water reaction to obtain hydrogen is the use of an alkali such as sodium hydroxide, since the cost is minimal because the hydroxide is recovered at the end of the reaction and it is not necessary an energy input.

Such reaction is as follows: aluminium (solid) reacts with water (liquid) and hydroxide aluminium (solid) and hydrogen (gas) are obtained.

In principle, the hydroxide is only used for removing the oxide layer that always exists on the metal surface.

Al (s) + H₂O (liq) → Al(OH)₃ (s)+ 3/2 H₂ (g)

However, since aluminium hydroxide precipitates on the surface of aluminium, the reaction stops when its contact with water is hindered. This requires working with solutions with higher concentration of sodium hydroxide, to cause the transformation of aluminium hydroxide (solid) in sodium aluminate (aqueous), which is dissolved.

One of the problems of working with high concentrations of sodium hydroxide is that the reaction is more violent, generates high temperatures, the produced hydrogen flow rate is not constant over time and that hydrogen drags sodium hydroxide particles that could contaminate the fuel cell.

Another of the problems derived from working by immersion or dosing of liquid on aluminium, is that the drops resulting when the liquid is withdrawn, or deposited on the aluminium, can become a solid film when the reaction is inactive, which can delay the restart of the reaction.

The objective of the present invention is therefore to develop a method for generating hydrogen from the reaction of aluminium with water that avoids the problems described above by using a solvent such as alcohol, and it must be pointed out that, at least by the applicant, it is unknown the existence of any other invention having the technical and constitutive characteristics similar to those presented by the method herein proposed, as claimed.

### EXPLANATION OF THE INVENTION

Concretely, therefore, it is proposed by the invention a method for generating hydrogen for fuel cells, by means of a reaction with aluminium and using alcohol in the hydroxide solution.

The addition of alcohol in the sodium or potassium hydroxide solution favours the reaction of aluminium with water for the production of hydrogen. The advantage of the alcohols is that they do not react with the aluminium, dissolve the hydroxides, are miscible in water and have lower density than aluminate.

Its main advantages are:
- It facilitates the introduction of all the aluminium in the reactor for the production of hydrogen and avoiding complex mechanical methods for the dosage of aluminium.
- It facilitates the control and interruption of the hydrogen flow rate generated by the reactor, depending on the dosage of sodium hydroxide solution; it allows the stops and the fast implementation.
- It facilitates the purge of air in the reactor by alcohol flooding.
- It facilitates the draining of the reactor.
- The emission of particles of soda caustic is reduced due to the formation of a film on the highest stage by its lower density with respect to the solution.
- It promotes the water sharing between the chips or particles of aluminium and its stirring, the reaction being more homogeneous.
- It facilitates the control of reaction making the reaction and flow rate of obtained hydrogen more constant over time.
- It reduces the rapid increase of the temperature in the reactor.
- It does not intervene in the reaction, so that it can not easily be recovered after the decantation reaction.
- During its evaporation, it traps particles of hydroxide that precipitate by distillation.
- It is used in solutions with a concentration from 30% to 40% by weight of sodium hydroxide to optimize the flow rate and total hydrogen obtained.

It should be noted that, according to trials conducted with different alcohols, the better results are obtained with lower density alcohols. In addition, among these, it is preferable to work with those of higher vaporisation temperature, lower reactivity and best price.

For this reason, isopropanol is preferable. Still, ethanol and bioethanol can also be used.

Among the advantages of isopropanol, it should be noted the following:
Good behaviour under flow rate conditions, at temperatures exceeding 60 °C.
Good hydrogen-amount of aluminium yield, low price, no toxicity at a low time-weighted average concentration, high boiling temperature which facilitates the control of fumes.

The disadvantage of working with isopropyl alcohol is that the total hydrogen yield obtained in comparison with the theoretical yield is approximately 85% or 90%. However, this can be corrected with the addition of a small amount of magnesium or potassium hydroxide.

With regard to the method for working with the alcohol in a reactor the steps would be as follows:
- The filling of the reactor with aluminium or aluminium alloys either in bar, pellets, chips, briquettes, pressed powders, or sheets is conducted.
- Alcohol is added to the reactor and is filled completely to remove the air from inside. Part of the alcohol is then emptied such that it only covers the aluminium, with the rest of the space being emptied or adding a noble gas or hydrogen. Other forms can be used for purging.

- The hydroxide solution is then metered according to the hydrogen demand.
- The hydrogen and the alcohol vapour generated are distilled in an exchanger.
- The distilled alcohol is returned to the reactor.
- The hydrogen is filtered and stored.

The described method for generating hydrogen by means of a reaction with aluminium thus represents an innovation of structural and constitutive characteristics unknown so far to this end, reasons which in combination with its practical utility, provide it with enough basis to obtain the exclusivity privilege which is applied for.

### DESCRIPTION OF THE DRAWINGS

In order to complement the description that is being carried out and with the object to help to a better understanding of the invention, a set of drawings is accompanied to the present specification as an integral part thereof, in which, with an illustrative and non-limiting character, the following has been represented:
Figure 1. It shows in a graph the comparison between the hydrogen flow rate obtained with alcohol and without alcohol in a trial.
Figure 2. It shows another comparison chart of hydrogen production, in this case with and without addition of magnesium hydroxide.
Figure 3. It shows another comparison chart between the hydrogen flow rate and the dosing flow rate of the solution.

### TRIALS

In a first trial a comparison is carried out between the flow rate obtained in litres per minute with a sodium hydroxide concentration of 35 % by weight in one solution with isopropanol alcohol and other non-alcoholic, as a function of time in seconds, for a similar sample of 30 grams of aluminium in chip with 1 mm thick. It is started by adding at once 5 ml and subsequently drop wise with a timing of 10 ml/min, increasing the dosing within 250 seconds.

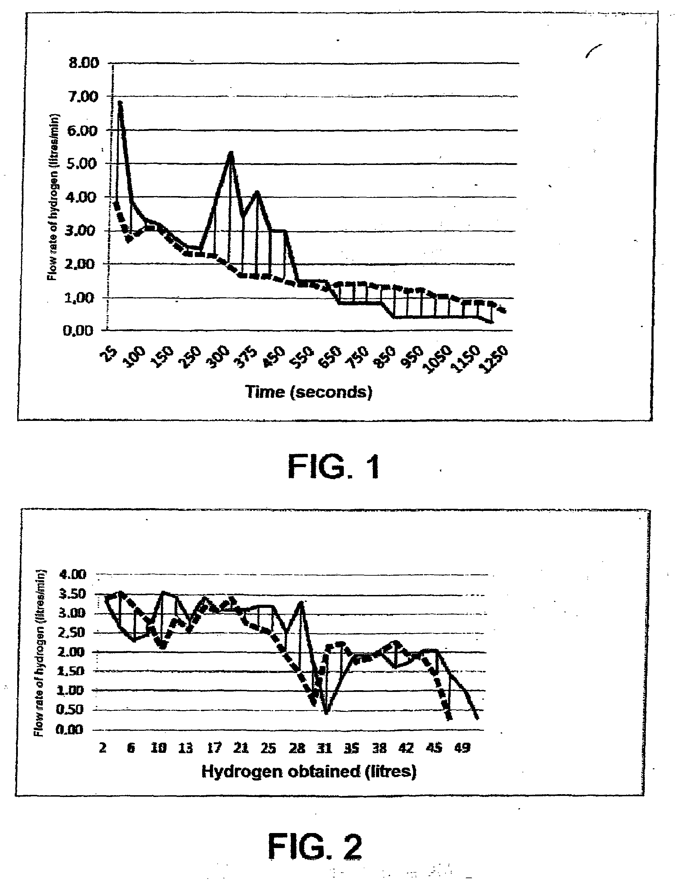

As shown in the graph in Figure 1, where the flow rate of the solution with alcohol has been represented with a solid line and that of the solution without alcohol with dashed line, it can be seen that, with the alcohol, the response to changes of sodium hydroxide dosage is more immediate. The flow rate decreases when aluminium is being exhausted or the dosage is reduced.

In a second trial, a tip of a spatula of magnesium hydroxide is added to the mixture and it is observed that the obtained total hydrogen yield by amount of aluminium increases.

Next, the obtained flow rates are compared, in litres/minute, for 45 grams of aluminium chip with a purity of 85% and 1 mm thick, with a concentration of 35% in soda caustic, with or without magnesium, depending on the total hydrogen obtained (litres), adding drop by drop the solution, with a timing of 10 ml/min. According to the graph in Figure 2, where the solid line shows the evolution of hydrogen obtained in the mix with magnesium hydroxide and the dashed line that of the mixture that does not include it, the results of this trial are appreciated.

Regarding the dosing, it should be noted the following:
The flow rate of hydrogen obtained is proportional to the amount of solution added, provided there is enough aluminium to react. It also depends on the temperature that can be held constant with a bath.

Other aspect to be highlighted is the thickness of the chip.

For a chip of 1 mm thick and a temperature between 60 °C and 75 °C the amount of hydrogen obtained is roughly equal to 0.3 litres/min of hydrogen per 1 ml/min of 35 % alcohol solution. For the manufacturing chip mixture, it is of the order of 0.2 litres/min of hydrogen per 1 ml/min of 35% alcohol solution.

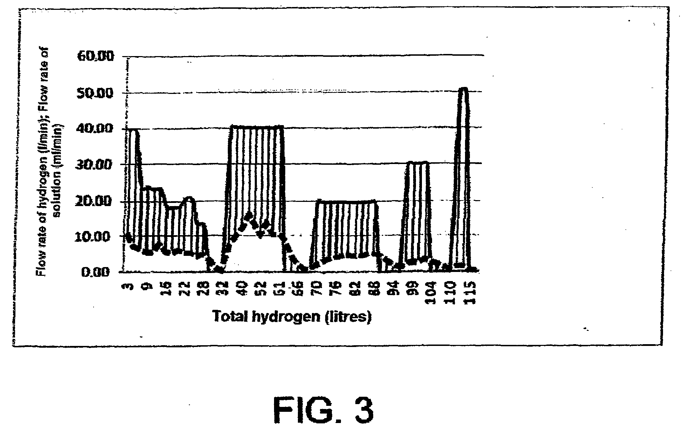

The graph of Figure 3 shows the flow rate of hydrogen (dashed line) for a solution (solid line) of 35% by weight in sodium hydroxide and with 200 ml of isopropanol, two tips of spatula of magnesium hydroxide and 100 g of aluminium of 1 mm thick depending on the total litres of hydrogen produced.

A total of 115.5 litres of hydrogen for a purity at 85% of aluminium are obtained.

## Claims

1. METHOD FOR GENERATING HYDROGEN BY MEANS OF A REACTION WITH ALUMINIUM, of the type applicable to fuel cells that generate hydrogen from the reaction of aluminium with water in a hydroxide solution, **characterised in that** the addition of alcohol as solvent in the dissolution.

2. METHOD FOR GENERATING HYDROGEN BY MEANS OF REACTION WITH ALUMINIUM, according to claim 1, **characterised in that** the used alcohol is chosen between those of lowest densities.

3. METHOD FOR GENERATING HYDROGEN BY MEANS OF A REACTION WITH ALUMINIUM, according to claim 2, **characterised in that** the used alcohol is chosen between those of biggest vaporization temperature and less reactivity.

4. METHOD FOR GENERATING HYDROGEN BY MEANS OF A REACTION WITH ALUMINIUM, according to claim 1, **characterised in that** the used alcohol is isopropanol.

5. METHOD FOR GENERATING HYDROGEN BY MEANS OF A REACTION WITH ALUMINIUM, according to claim 1, **characterised in that** the used alcohol is ethanol.

6. METHOD FOR GENERATING HYDROGEN BY MEANS OF A REACTION WITH ALUMINIUM, according to claim 1, **characterised in that** the used alcohol is bioethanol.

7. METHOD FOR GENERATING HYDROGEN BY MEANS OF A REACTION WITH ALUMINUM, according to any of claims 1-6, **characterised in that** it comprises the following steps:
- Filling the reactor with aluminium or aluminium alloys either in bar, pellets, chips, briquettes, pressed powders, or sheets.
- Alcohol is added to the reactor and is filled completely to remove the air from inside. Part of the alcohol is then emptied such that it only covers the aluminium, with the rest of the space being emptied.
- The hydroxide solution is then metered according to the hydrogen demand.
- The hydrogen and the alcohol vapour generated are distilled in an exchanger.
- The distilled alcohol is returned to the reactor.
- The hydrogen is filtered and stored.

## Amended claims

### Amended claims under Art. 19.1 PCT

**1.** METHOD FOR GENERATING HYDROGEN BY MEANS OF A REACTION WITH ALUMINIUM, generating said hydrogen based on reacting aluminium, with any metal format and **characterised in that** it is contained in the reactor together with a liquid alcohol, and **in that** to this is added water in solution with a hydroxide.

**2.** METHOD FOR GENERATING HYDROGEN BY MEANS OF REACTION WITH ALUMINIUM, according to claim 1, **characterised in that** the used alcohol is chosen between the densities lower than alcohol 1 g/ml since viscosity slows down the reaction.

**3.** METHOD FOR GENERATING HYDROGEN BY MEANS OF A REACTION WITH ALUMINIUM, according to claim 2, **characterised in that** the used alcohol is chosen between alcohols whose temperature exceeds 65 °C to prevent excessive formation of vapours.

**4.** METHOD FOR GENERATING HYDROGEN BY MEANS OF A REACTION WITH ALUMINIUM, according to claim 1, **characterised in that** the used alcohol is isopropanol.

**5.** METHOD FOR GENERATING HYDROGEN BY MEANS OF A REACTION WITH ALUMINIUM, according to claim 1, **characterised in that** the used alcohol is ethanol.

**6.** METHOD FOR GENERATING HYDROGEN BY MEANS OF A REACTION WITH ALUMINIUM, according to claim 1, **characterised in that** the used alcohol is bioethanol.

**7.** METHOD FOR GENERATING HYDROGEN BY MEANS OF A REACTION WITH ALUMINIUM, according to any of claims 1-6, **characterised in that** it comprises the following steps:
- Filling the reactor with aluminium or aluminium alloys either in bar, pellets, chips, briquettes, pressed powders, or sheets.
- Alcohol is added to the reactor and is filled completely to remove the air from inside. Part of the alcohol is then emptied such that it only covers the aluminium, with the rest of the space being emptied.
- The hydroxide solution is then metered according to the hydrogen demand.
- The hydrogen and the alcohol vapour generated are distilled in an exchanger.
- The distilled alcohol is returned to the reactor.
- The hydrogen is filtered and stored.
